# EUROPÄISCHE PATENTANMELDUNG

(11) **EP 3 973 759 A1**
(43) Veröffentlichungstag der Anmeldung: **30.03.2022**
(21) Anmeldenummer: 21189047.0
(22) Anmeldetag: 02.08.2021
(51) Int. Cl.: A01B 79/00, A01C 21/00, B64C 39/02, B64D 1/18

(54) **VERFAHREN ZUM AUSFÜHREN EINER LANDWIRTSCHAFTLICHEN TÄTIGKEIT**

(30) Priorität: 29.09.2020 DE 102020125393
(71) Anmelder: CLAAS Selbstfahrende Erntemaschinen GmbH, 33428 Harsewinkel (DE)
(72) Erfinder: Uhlmann, Patrick, 33775 Versmold (DE); Buda, Andreas, 33330 Gütersloh (DE)
(74) Vertreter: CLAAS Gruppe

(57) **Zusammenfassung**

Offenbart ist ein Verfahren zum Ausführen einer landwirtschaftlichen Tätigkeit auf einem Feld (3), wobei eine mobile Ladestation (2) mindestens eine Drohne (1) steuert und der Drohne (1) Energie bereitstellt, mittels derer die Drohne (1) die landwirtschaftliche Tätigkeit ausführt und die Ladestation (2) die mindestens eine Drohne (1) über das Feld (3) begleitet. Um die Nutzung der Drohnen zu verbessern wird vorgeschlagen, dass die Ladestation (2) autonom über das Feld (3) fährt und der mindestens einen Drohne (1) Betriebsmittel für die landwirtschaftliche Tätigkeit bereitstellt, insbesondere zum Säen, Setzen, Bewässern oder Düngen von Pflanzen oder zum Bekämpfen von Schädlingen oder Krankheiten der Pflanzen.

## Beschreibung

Die Erfindung betrifft ein Verfahren zum Ausführen einer landwirtschaftlichen Tätigkeit auf einem Feld, wobei eine mobile Ladestation mindestens einer Drohne Energie bereitstellt, mittels derer die Drohne die landwirtschaftliche Tätigkeit ausführt und die mindestens eine Drohne über das Feld begleitet. Die Ausführung landwirtschaftlicher Tätigkeiten mittels fliegender Drohnen - insbesondere das Säen, Setzen, Bewässern oder Düngen von Pflanzen, das Bekämpfen von Schädlingen oder Krankheiten der Pflanzen sowie das optische Erfassen und Beobachten der Bestände auf dem Feld - vermeidet einerseits die Verdichtung des Bodens durch Personen oder fahrende Maschinen und erlaubt andererseits ein sehr kleinteiliges Vorgehen bis hin zum Setzen, Untersuchen und Behandeln einzelner Pflanzen.

DE10 2014 201 203 A1 schlägt eine landwirtschaftliche Maschine vor mit einer Drohne zum optischen Erfassen der Bestände auf dem Feld, wobei die landwirtschaftliche Maschine der Drohne als Leit- und Ladestation dient. DE 10 2018 113 742 A1 schlägt ergänzend vor, dass die landwirtschaftliche Maschine die Drohne über einen Laserstrahl mit Energie versorgt.

Die Einsatzdauer der Drohnen für landwirtschaftliche Tätigkeiten ist durch ihre Transportkapazität und insbesondere durch die für den Einsatz verfügbare Energie begrenzt. Nach den bekannten Verfahren werden lange und energiezehrende Flugwege vermieden, weil sich das Einsatzgebiet der Drohnen jeweils in der unmittelbaren Umgebung der mobilen Leit- und Ladestation befindet.

Im Hintergrund der Erfindung schlägt US 2014/0303814 A1 vor, mittels Drohnen einzelne Pflanzen zu säen oder zu setzen, zu bewässern und zu düngen und eine mobile Leit- und Ladestation für die Drohnen am Rand des Felds zu stationieren. Aus WO 2016/087535 A1 ist es bekannt, eine Mehrzahl von selbstfahrenden landwirtschaftlichen Maschinen mittels eines Leitfahrzeugs zu steuern.

### Aufgabe

Der Erfindung liegt die Aufgabe zugrunde, die Nutzung der Drohnen zu verbessern.

### Lösung

Ausgehend von dem bekannten Verfahren wird nach der Erfindung vorgeschlagen, dass die Ladestation autonom über das Feld (3) fährt und der mindestens einen Drohne (1) Betriebsmittel für die landwirtschaftliche Tätigkeit bereitstellt, insbesondere zum Säen, Setzen, Bewässern oder Düngen von Pflanzen oder zum Bekämpfen von Schädlingen oder Krankheiten der Pflanzen. Die nach der Erfindung fahrerlose Ladestation benötigt im Vergleich zu der landwirtschaftlichen Maschine aus DE10 2014 201 203 A1 und DE 10 2018 113 742 A1 kein Personal, insbesondere aber dadurch auch keine Fahrerkabine, kann so deutlich kleiner und leichter dimensioniert werden und vermeidet unnötige Verdichtung des Bodens.

Vorzugsweise nutzt in einem erfindungsgemäßen Verfahren die Ladestation zum Fahren auf dem Feld vorhandene Fahrspuren. Ein solches erfindungsgemäßes Verfahren vermeidet die zusätzliche Verdichtung von Boden auf dem Feld.

Bekannte flugfähige Drohnen weisen mindestens eine Kamera zum Beobachten des überflogenen Gebiets auf und können so ohne technische Veränderung bereits zum Erfassen der Bestände auf dem Feld genutzt werden. Alternativ oder zusätzlich können eine oder mehrere der Drohnen mit zusätzlicher Sensorik ausgestattet werden, insbesondere mit einer Wärmebildkamera oder mit Sensoren für Temperatur, Feuchte oder andere Komponenten der Umgebungsluft, sowie von Pflanzen- oder Bodenproben. Mit einem solchen erfindungsgemäßen Verfahren können unterschiedliche Wachstumseinflüsse und die Pflanzengesundheit erfasst werden.

Vorzugsweise stellt in einem erfindungsgemäßen Verfahren die Ladestation der mindestens einen Drohne die Energie als elektrische Energie bereit, insbesondere durch Induktion oder mittels Laser. Ein solches erfindungsgemäße Verfahren vermeidet die Beeinträchtigung des Ladevorgangs durch verschmutzte oder korrodierte Kontakte.

Vorzugsweise erzeugt in einem erfindungsgemäßen Verfahren die Ladestation die elektrische Energie, insbesondere durch Verbrennen eines stofflichen Energieträgers oder mittels Photovoltaik. Stoffliche Energieträger wie Diesel, Flüssiggas und flüssiger Wasserstoff weisen eine gegenüber Batterien höhere Energiedichte auf und verringern in einem solchen erfindungsgemäßen Verfahren Gewicht und Volumen der Ladestation.

Vorzugsweise kommunizieren in einem erfindungsgemäßen Verfahren die mindestens eine Drohne und die Ladestation Ladungszustände der Betriebsmittel und/oder der Energie untereinander und/oder an einen Server. In einem solchen erfindungsgemäßen Verfahren können die Drohne und die Ladestation die Betriebs- und Ladezeiten dynamisch an den tatsächlichen Verbrauch anpassen.

In einem erfindungsgemäßen Verfahren kann die Ladestation die Drohne steuern. Die Drohne benötigt dann keine eigene Information über das von ihr überflogene Feld. Alternativ kann die Drohne das Feld autonom oder gesteuert von einer getrennten Leitstation überfliegen und die Ladestation lediglich über ihre Position informieren. In einem solchen erfindungsgemäßen Verfahren benötigt die Ladestation keine weitere Information über die von der Drohne ausgeführte landwirtschaftliche Tätigkeit.

### Ausführungsbeispiel

Die Erfindung ist nachstehend anhand eines Ausführungsbeispiels näher erläutert. Es zeigt
- Fig. 1:: eine Ladestation und eine Drohne während der landwirtschaftlichen Tätigkeit in zwei schematischen Ansichten sowie
- Fig. 2:: in einer perspektivischen Darstellung, und
- Fig. 3:: die Ladestation und die Drohne beim Laden in zwei schematischen Ansichten.

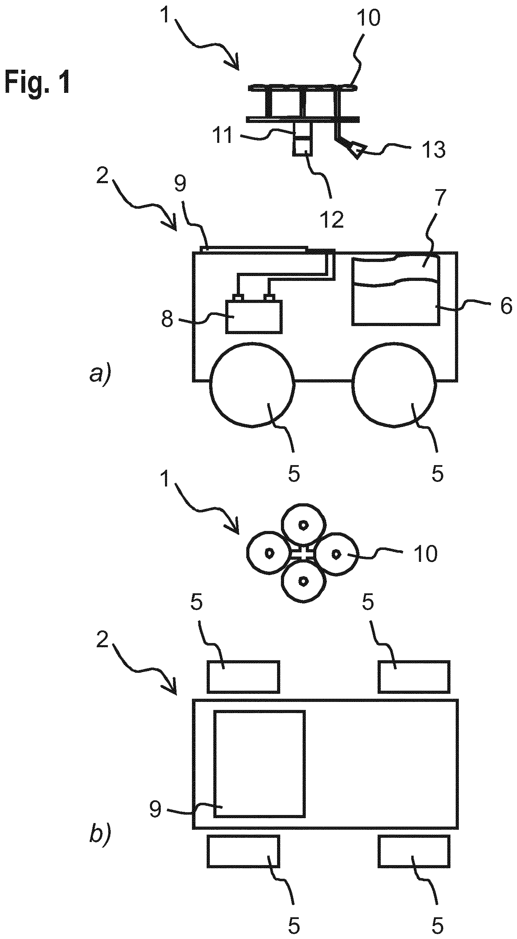

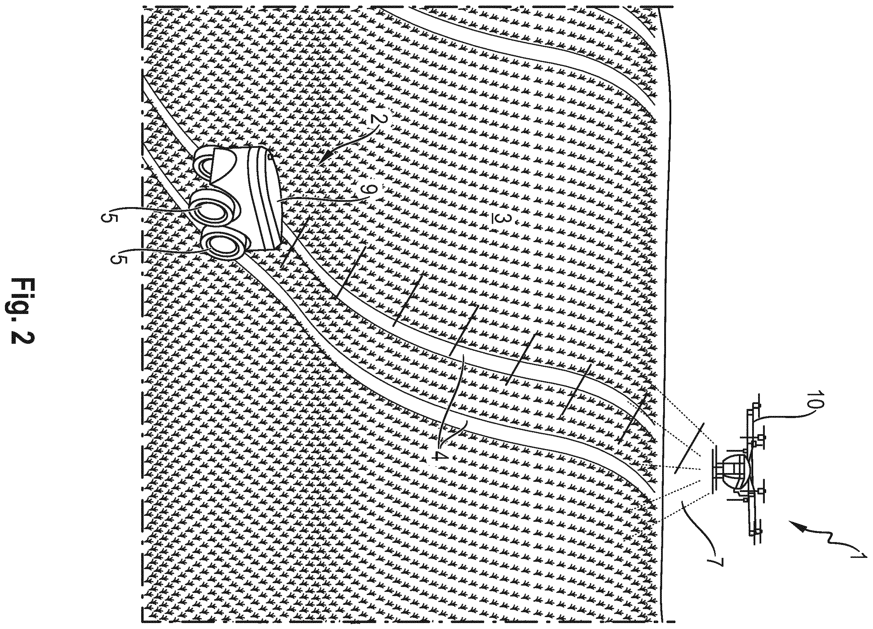

Die in den Figuren 1a und 1b in schematischer Seitenansicht und Draufsicht und in Figur 2 in einer perspektivischen Darstellung während der landwirtschaftlichen Tätigkeit gezeigte Drohne 1 mit ihrer Ladestation 2 führen eine Düngung der nicht im Detail dargestellten Pflanzen auf einem Feld 3 durch. Die Drohne 1 fliegt in einem Umkreis von bis zu 50 m um die Ladestation 2, die ihr autonom auf bestehenden Fahrspuren 4 des Felds 3 folgt.

Die Ladestation 2 weist vier Räder 5, einen Speicher 6 mit flüssigem Dünger 7, eine Bleibatterie 8, eine Landeplattform 9 und eine nicht dargestellte Steuereinheit auf. Die Drohne 1 ist ein "Quadcopter" mit vier Rotoren 10, einem kleineren Speicher 11, einer Sprüheinheit 12, einem Saugrüssel 13 und wiederum einer nicht dargestellten Steuereinheit mit einer hochauflösenden Kamera.

Die Steuereinheit der Ladestation 2 umfasst ein GPS-Modul und verfügt über eine digitale Karte des Feldes 3. Die Steuereinheit der Drohne umfasst gleichfalls ein GPS-Modul. Die Ladestation 2 steuert die Drohne anhand der Karte des Felds 3. Die Steuereinheit der Ladestation 2 umfasst weiterhin ein Mobilfunkmodul. Die Ladestation ist über das Mobilfunkmodul fernsteuerbar.

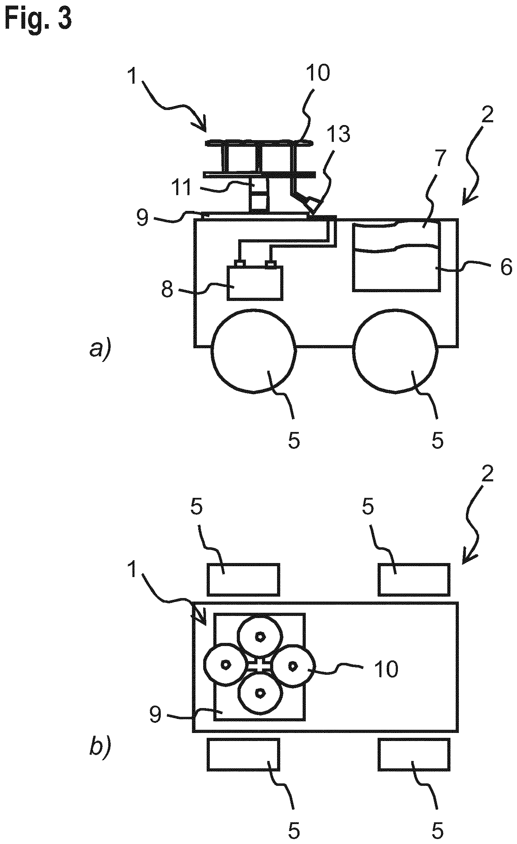

Die Steuereinheiten der Drohne 1 und der Ladestation 2 kommunizieren über WLan ihre jeweiligen exakten Positionen sowie die Ladezustände des Düngers 7 und der verfügbaren Energie: Sobald die Drohne 1 den aufgenommenen Dünger 7 verteilt hat oder die elektrische Energie einen Minimalwert erreicht, fliegt sie eigenständig zu der Landeplattform 9 und nimmt in der in Figur 3 dargestellten Stellung nach Bedarf über den Saugrüssel 13 aus dem Speicher 6 der Ladestation 2 weiteren Dünger 7 und induktiv über die Landeplattform 9 elektrische Energie aus der Bleibatterie auf.

Sobald der Dünger 7 im Speicher 6 der Ladestation 2 einen kritischen Wert erreicht, meldet sie dieses über das Mobilfunkmodul. Ist der Dünger 7 im Speicher 6 oder die elektrische Energie in der Bleibatterie 8 der Ladestation 2 verbraucht, ruft sie die Drohne zurück auf die Landeplattform 9 und sucht eigenständig eine Parkposition am Rand des Felds 3 auf.

### Bezugszeichen

- 1: Drohne
- 2: Ladestation
- 3: Feld
- 4: Fahrspur
- 5: Rad
- 6: Speicher
- 7: Dünger
- 8: Bleibatterie
- 9: Landeplattform
- 10: Rotor
- 11: Speicher
- 12: Sprüheinheit
- 13: Saugrüssel

## Patentansprüche

1. Verfahren zum Ausführen einer landwirtschaftlichen Tätigkeit auf einem Feld (3), wobei eine mobile Ladestation (2) mindestens einer Drohne (1) Energie bereitstellt, mittels derer die Drohne (1) die landwirtschaftliche Tätigkeit ausführt und die mindestens eine Drohne (1) über das Feld (3) begleitet, **dadurch gekennzeichnet, dass** die Ladestation (2) autonom über das Feld (3) fährt und der mindestens einen Drohne (1) Betriebsmittel für die landwirtschaftliche Tätigkeit bereitstellt, insbesondere zum Säen, Setzen, Bewässern oder Düngen von Pflanzen oder zum Bekämpfen von Schädlingen oder Krankheiten der Pflanzen.

2. Verfahren nach dem vorgenannten Anspruch, **dadurch gekennzeichnet, dass** die Ladestation (2) zum Fahren auf dem Feld (3) vorhandene Fahrspuren (4) nutzt.

3. Verfahren nach einem der vorgenannten Ansprüche, **dadurch gekennzeichnet, dass** die Ladestation (2) der mindestens einen Drohne (1) die Energie als elektrische Energie bereitstellt, insbesondere durch Induktion oder mittels Laser.

4. Verfahren nach dem vorgenannten Anspruch, **dadurch gekennzeichnet, dass** die Ladestation (2) die elektrische Energie erzeugt, insbesondere durch Verbrennen eines stofflichen Energieträgers oder mittels Photovoltaik.

5. Verfahren nach einem der vorgenannten Ansprüche, **dadurch gekennzeichnet, dass** die mindestens eine Drohne (1) und die Ladestation (2) Ladungszustände der Betriebsmittel und/oder der Energie untereinander und/oder an einen Server kommunizieren.

6. Verfahren nach einem der vorgenannten Ansprüche, **dadurch gekennzeichnet, dass** die Ladestation (2) die mindestens eine Drohne (1) steuert.
